**Europäisches Patentamt**

**European Patent Office**

**Office européen des brevets**

(11) Veröffentlichungsnummer: **0 334 136**

**A2**

## (12) EUROPÄISCHE PATENTANMELDUNG

(21) Anmeldenummer: 89104339.0

(22) Anmeldetag: 11.03.89

(51) Int. Cl.⁴ **G03B 42/04**

(30) Priorität: 25.03.88 DE 3810094

(43) Veröffentlichungstag der Anmeldung:
27.09.89 Patentblatt 89/39

(84) Benannte Vertragsstaaten:
**BE FR IT**

(71) Anmelder: **Agfa-Gevaert AG**

**D-5090 Leverkusen 1(DE)**

(72) Erfinder: **Schneider, Rudolf, Dipl.-Ing.**
**Theresienstrasse 11** .
**D-8068 Pfaffenhofen(DE)**
Erfinder: **Müller, Jürgen, Dipl.-Ing.**
**Bozzarisstrasse 7**
**D-8000 München 90(DE)**
Erfinder: **Voigtländer, Volkmar, Dipl.-Phys.**
**Goethestrasse 3**
**D-8031 Eichenau(DE)**

(54) **Röntgenaufnahmefolie mit einer stimulierbaren Phosphorschicht und Gerät zu deren Behandlung und Auswertung.**

(57) Eine Röntgenaufnahmefolie, die als strahlenempfindliche Schicht eine auf einer Unterlage aufgebrachte Schicht stimulierbaren Phosphors aufweist, ist so ausgebildet, daß auf der der Phosphorschicht (2a) abgewandten Seite der Unterlage (2b) eine Schicht (2d) aus magnetisierbarem Material aufgebracht ist. Ein zur Behandlung und Auswertung einer derartigen Aufnahmefolie geeignetes Gerät mit einer Planfilmbühne für die Aufnahmefolie ist derart ausgestaltet, daß über der Oberfläche (4) wenigstens eine zu öffnende und zu schließende Transportklammer (15) in Eingabe- und Ausführrichtung (22) einer Aufnahmefolie (2) verschiebbar an der Planfilmbühne (3) geführt ist, daß die Aufnahmefolie (2) durch Transportmittel (14), mit ihrer magnetisierbaren Schicht (2d) der permanent magnetischen Oberfläche (4) zugewandt, in die geöffneten Transportklammern (15) einlegbar ist und diese schließbar sind und die Aufnahmefolie (2) mittels der Transportklammern (15) über Vorsprünge (6) in ihre Behandlungsposition bringbar ist. Hierdurch wird eine besonders schonende Behandlung der Phosphorschicht der Aufnahmefolie und eine lange Lebensdauer derselben erreicht.

Fig 1

## Röntgenaufnahmefolie mit einer stimulierbaren Phosphorschicht und Gerät zu deren Behandlung und Auswertung

Die Erfindung betrifft eine Röntgenaufnahmefolie, die als strahlenempfindliche Schicht eine auf einer Unterlage aufgebrachte Schicht stimulierbaren Phosphors aufweist und/oder ein Gerät zur Behandlung und Auswertung einer derartigen mit Röntgenstrahlen belichteten Röntgenaufnahmefolie, in dem die Röntgenaufnahmefolie in eine Planfilmbühne einführbar und auf dieser festlegbar ist.

Die Behandlung und Auswertung der eingangs genannten Röntgenaufnahmefolien beruht im wesentlichen darauf, daß bei der Belichtung der in einer Kassette befindlichen Folie mit Röntgenstrahlen ein latentes Bild entsteht. In einer Lesestation wird nach dem Entnehmen der Folie aus der Kassette mittels eines Laserstrahlscan ners das latente Bild zum Leuchten gebracht (der Phosphor stimuliert) und das hierbei ausgesandte Licht in digitale elektrische Bildsignale umgesetzt, die auf einem Bildschirm oder einem Bildschirmaufnahmegerät oder einem computergesteuerten Laserstrahlaufnahmegerät wieder zu einem sichtbaren Bild umgewandelt werden können. Dann wird das latente bzw. leuchtende Bild gelöscht und die Folie einem Kassettenbeladegerät zugeführt. Die Identifizierungsdaten der Folie müssen dabei auch ausgelesen und in digitale elektrische Identifizierungssignale umgesetzt und den digitalen Bildsignalen zugeführt werden.

Ein Nachteil dieses bekannten Verfahrens ist darin zu sehen, daß die Folie zwischen dem Entnehmen aus der Kassette in der Lesestation und dem Wiedereinführen in die Kassette in einem Kassettenbeladegerät, gegen mechanische Einflüsse ungeschützt, ziemliche Wege zurücklegen muß, wodurch eine vorzeitige Abnutzung der Phosphorschicht bedingt sein kann. Diese Abnutzung wird noch dadurch erhöht, daß die Folie zu ihrer Behandlung und Auswertung durch die üblichen Transportmittel in eine bekannte Filmbühne übergeben und von ihr wieder abgenommen werden muß, wobei Transportmittel und Folienhaltemittel der Filmbühne auch an der Folienoberseite, also der Phosphorschicht, angreifen. Die Lebensdauer derartiger bekannter Folien bei Auswertung in bisher bekannten Geräten beträgt daher nur etwa 2000 bis 3000 Belichtungen.

In den nicht vorveröffentlichten DE-OS 37 31 203 und DE-OS 37 31 204 sind bereits Röntgenfilmkassetten für phosphorbeschichtete Aufnahmefolien und Geräte zur Behandlung und Auswertung von in derartigen Kassetten befindlichen Aufnahmefolien beschrieben worden, durch die eine wesentliche Schonung der Phosphorschicht bewirkt wird. Trotzdem ist deren Abnutzung durch die Verwendung bekannter Filmbühnen noch nicht optimal reduziert worden.

Der Erfindung liegt die Aufgabe zugrunde, eine Röntgenaufnahmefolie der eingangs genannten Art und eine Filmbühne in Behandlungs- und Auswertungsgeräten für derartige Röntgenaufnahmefolien derart auszubilden, daß bei der Übergabe einer Folie an eine erfindungsgemäße Filmbühne und der Abgabe der Folie von der Filmbühne eine ganz erheblich größere Schonung der Phosphorschicht der Folien erreicht wird.

Diese Aufgabe wird erfindungsgemäß gelöst durch eine Folienausbildung gemäß dem Hauptanspruch und eine Geräte- bzw. Filmbühnenausbildung nach Anspruch 3. Weitere vorteilhafte Merkmale der Erfindung sind den Unteransprüchen entnehmbar.

Durch das Aufbringen einer magnetisierbaren Schicht auf der Folienrückseite kann die Filmbühne als permanentmagnetische Schicht ausgebildet sein, so daß an der Filmbühne keine Halteklauen, die über die Folienränder greifen und die Phosphorschicht verletzen können, vorgesehen sind. Durch die Ausbildung der Transportklammern, auf deren einem Teil eine Folie mit ihrer phosphorbeschichteten Seite mittels eines Saugers abgelegt wird, sowie durch die versenkbaren, nicht magnetischen Vorsprünge in der Filmbühne, über die die Folienrückseite bis zur richtigen Positionierung in der Filmbühne gezogen wird, wird eine derartige Schonung der Phosphorschicht erreicht, daß, insbesondere in Verbindung mit den Maßnahmen nach den oben genannten Veröffentlichungen, ein Mehrfaches der bisherigen Lebensdauer der phosphorbeschichteten Röntgenaufnahmefolien erreicht wird. Versuche haben ergeben, daß ca. 10.000 Belichtungen und Auswertungen einer erfindungsgemäßen Folie in einem erfindungsgemäßen Gerät ohne störende Abnutzungserscheinungen möglich sind.

Die Erfindung wird anhand von Zeichnungen näher erläutert. Es zeigen

Fig. 1 eine perspektivische Darstellung der erfindungswesentlichen Teile einer erfindungsgemäßen Filmbühne, ausgezogen in einer ersten und strichpunktiert in einer zweiten Stellung,

Fig. 2 eine nicht maßstäbliche Darstellung eines Schnittes durch eine erfindungsgemäße Röntgenaufnahmefolie,

Fig. 3 einen Schnitt durch Teile der Filmbühne nach Figur 1 beim Einführen einer Aufnahmefolie nach Figur 2,

Fig. 4 die Darstellung nach Figure 3 beim Ausgeben einer Aufnahmefolie aus der Filmbühne,

Fig. 5 einen nicht maßstäblichen, abgebrochenen Schnitt durch einen der Folienpositionierung dienenden Teilbereich der Filmbühne nach Figur 1 mit Steuermitteln für Foliengleitvorsprünge,

Fig. 6 und 7 abgebrochene Schnitte durch weitere Ausgestaltungen von Foliengleitvorsprüngen.

Die Erfindung geht aus von Röntgenfilmkassetten 1, die aus zwei gegeneinander verschwenkbaren Teilen 1a, 1b bestehen. In den Kassetten 1 befindet sich zur Herstellung von Röntgenaufnahmen je eine Röntgenaufnahmefolie 2, die eine Schicht 2a aus stimulierbarem Phosphor aufweist. Diese röntgenstrahlenempfindliche Schicht 2a ist der Bodenseite des Bodenteiles 1a zugewandt, welche den Röntgenstrahlen bei der Belichtung zugewandt ist. In bisher üblicher Weise ist die Phosphorschicht 2a auf einer Unterlage 2b, z.B. einer Polyesterunterlage, aufgebracht und durch eine dünne, röntgenstrahlendurchlässige Schutzschicht 2c abgedeckt. Derartige in Kassetten 1 belichtete Folien 2 werden nun in Behandlungs- und Auswertgeräten aktiviert, ausgelesen, gelöscht und wieder in eine Kassette 1 eingebracht. Als Behandlungs- und Auswertgeräte können alle hierfür bekannten Geräte, insbesondere aber die Lesestationen, die in der DE-OS 37 31 203 und der DE-OS 37 31 204 beschrieben sind, verwendet werden. Dabei können Kassetten 1 verschiedenen Formats entweder an einer bei allen Kassetten gleichgelagerten Kassettenecke, z.B. der in Kassetteneingaberichtung stirnseitigen linken Ecke, oder auf der in Kassetteneingaberichtung verlaufenden Kassettenmittelebene positioniert werden. Die Bestimmung des Kassettenformats kann auf irgendeine bekannte Weise erfolgen. Je nach Positionierungsart und Kassettenformat als dann auch die Zuordnung der übrigen Teile einer Lesestation zu treffen. Dabei muß eine Folie aus einer Kassette 1 in eine Filmbühne 3 und zurück von dieser wieder in eine Kassette transportiert werden, und es muß die Folie 2 in der Filmbühne 3 unverschiebbar gehaltert sein. Bei Verwendung der bekannten phosphorbeschichteten Folien 2 und Filmbühnen 3 trat hierbei eine zu große Abnutzung der Phosphorschicht auf, so daß die Zahl der Benutzungen für eine Folie auf 2000 bis 3000 beschränkt war.

Daher wurden mit der Erfindung eine phosphorbeschichtete Folie 2 und eine Filmbühne 3 geschaffen, die in ihrem Zusammenwirken zu einer erheblich größeren Schonung der Phosphorschicht 2a und daher erheblich höheren Benutzungszahlen einer Folie, und zwar etwa in der Größenordnung über 10.000 Benutzungen, führen. Dabei sind die nachfolgend beschriebene Folie 2 und Filmbühne 3 naturgemäß auch dann verwendbar, wenn die Aufnahmefolie 2 nicht aus einer Kassette 1 der Filmbühne 3 zuführbar ist, sondern direkt aus einem Röntgenaufnahmegerät, und nach der Auswertung und Löschung in ein Filmmagazin eines Röntgenaufnahmegerätes zurückgeführt werden soll.

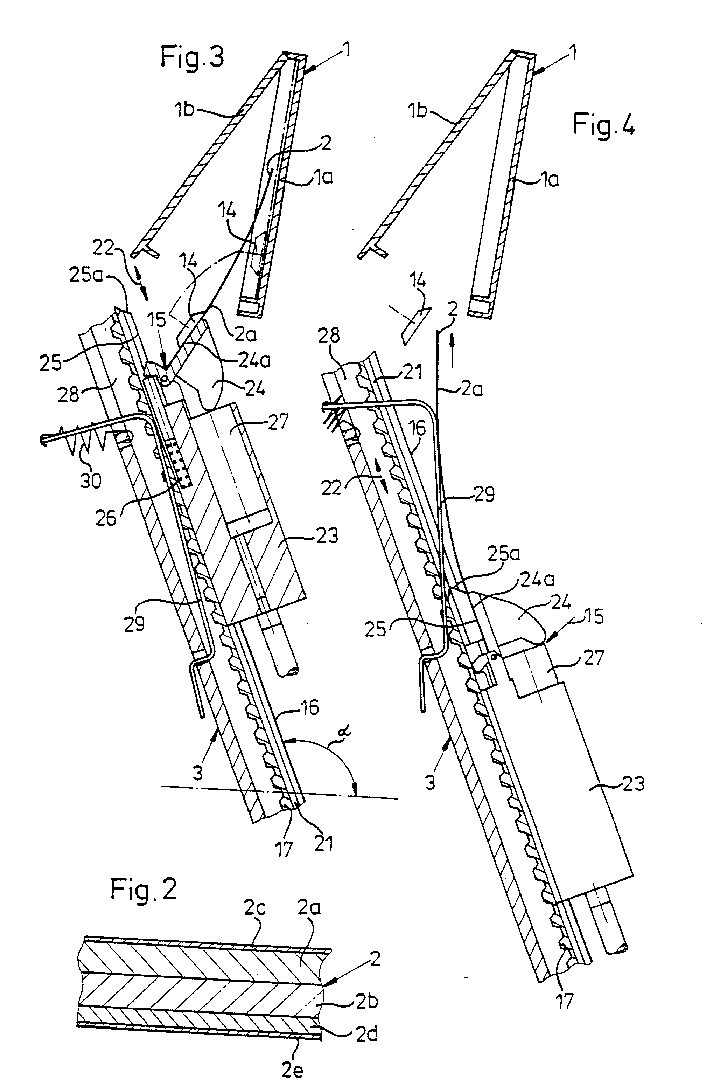

Zu diesem Zweck ist gemäß Figur 2 die mit stimulierbarem Phosphor 2a beschichtete Folie 2 auf der der Phosphorschicht 2a abgewandten Seite der Unterlage 2b mit einer magnetisierbaren Schicht 2d beschichtet oder anderweitig verbunden, z.B. verklebt. Die magnetisierbare Schicht 2d besteht vorzugsweise aus einer dünnen Stahlfolie. Diese kann zusätzlich mit einer dünnen Schutzschicht 2e überzogen sein.

Zur Fixierung einer Folie 2 in der positionierten Stellung auf der Filmbühne 3 weist letztere eine permanentmagnetische Oberfläche 4 von mindestens der Größe des größten vorkommenden Folienformates auf. Würde eine Folie 2 mit ihrer magnetisierbaren Schicht 2d nun beispielsweise direkt durch Sauger in der richtigen Position auf die permanentmagnetische Schicht 4 aufgelegt, so daß die zu behandelnde Phosphorschicht 2a zu Behandlung und Auswertung über ihre gesamte Fläche folgt, also bis zu ihren Rändern nutzbar und auswertbar ist, so wäre sie sehr Schwer wieder von der Filmbühne 3 abzulösen. Außerdem ist der Normalfall, daß eine Folie 2 nicht in positionierter Lage auf eine Filmbühne 3 aufgelegt, sondern parallel zu dieser in sie hineintransportiert wird. Ein solcher Transport wäre nicht möglich, wenn die zuerst in die Filmbühne bewegten Folienbereiche sofort an der permanentmagnetischen Schicht haften blieben.

Um diese Nachteile einer magnetischen Filmbühne 3 zu vermeiden, weist die Filmbühne 3 im Bereich ihrer magnetischen Schicht 4 in regelmäßigen Abständen bzw. als regelmäßige Muster Durchbrüche 5 auf, in denen senkrecht zur Bühnenfläche und damit auch zur magnetischen Schicht 4 verschiebbare Rippen oder Stifte 6 gelagert sind. Sie werden durch nachfolgend näher zu beschrei bende Mittel über eine elektronische Steuervorrichtung 7 während eines Folientransportes in die oder aus der Filmbühne über die Oberfläche der magnetischen Schicht 4 als Gleitvorsprünge herausbewegt, so daß eine Folie 2 mit ihrer magnetisierbaren Schicht 2d bzw. ihrer Schutzschicht 2e beim Einführen in die Filmbühne 2 mit Abstand von der magnetischen Schicht 4 über die Vorsprünge 6 in ihre Position gleitet. Dann werden die Vorsprünge 6 unter die Bühnenoberfläche 4 zurückgezogen, so daß die magnetisierbare Schicht 2d mit der magnetischen Schicht 4 praktisch in Berührung kommt und die Folie an die Filmbühne angezogen wird. Zum Wegtransport einer behandelten Folie 2 werden durch die elektronische Steuervorrichtung 7 die Vorsprünge 6 in ihre vorstehende Lage gesteuert, so daß die Folie 2 etwa gleichzeitig an vielen Stellen von der Magnetschicht 4 weg angehoben und so von letzterer abgelöst wird, so daß die Folie dann auf irgendeine Weise wieder abtransportiert werden kann.

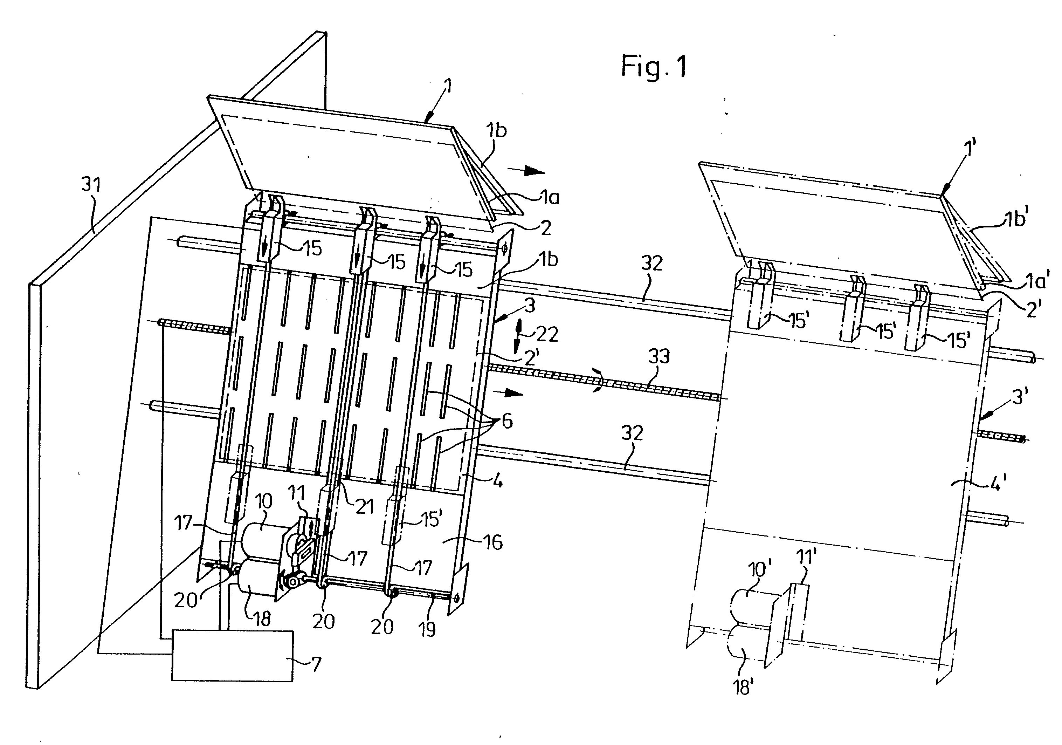

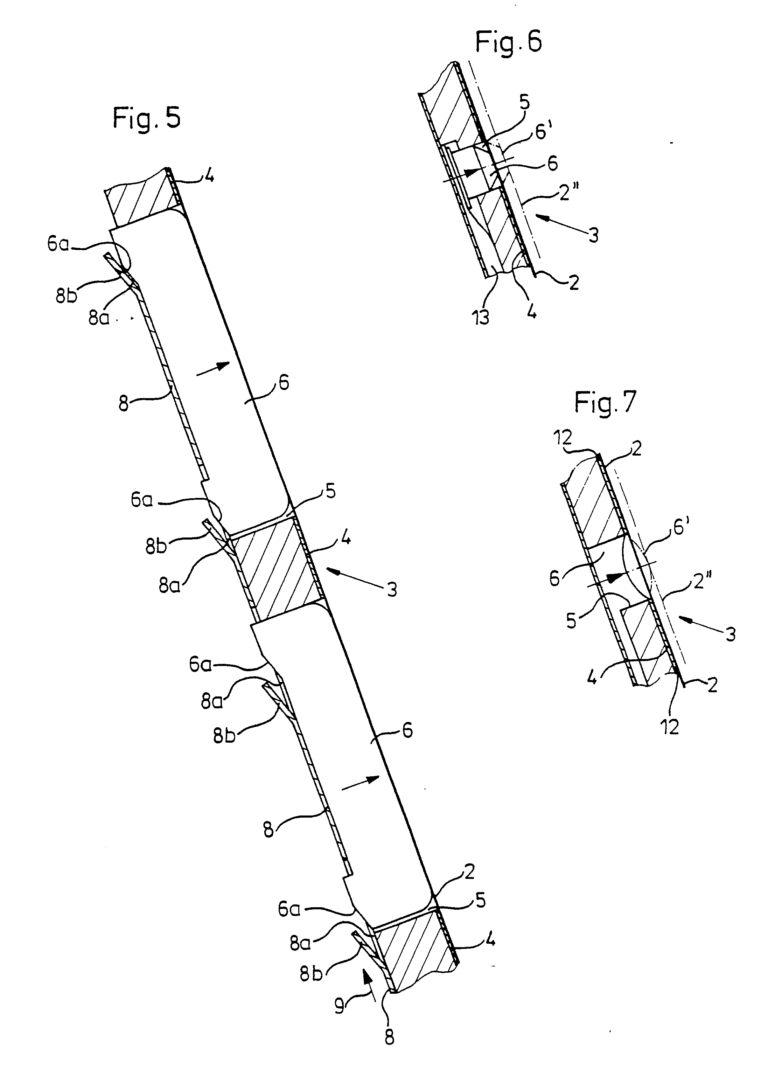

Ein Ausführungsbeispiel für derartige steuerbare Vorsprünge 6 ist in den Figuren 1 und 5 gezeigt. Hier sind die Vorsprünge als zueinander parallele Gleitrippen 6 ausgebildet, die in ihren Unterseiten Schrägflächen 6a aufweisen. Den Schrägflächen 6a verschiedener Gleitrippen 6 sind mehrere Schieber oder eine gemeinsame Schieberplatte 8 mit Ausstanzungen 8a zum Hindurchgreifen der Schrägflächen 6a zugeordnet, wobei die bei den Ausstanzungen entstehenden Lappen 8b als zu den Schrägflächen 6a etwa parallele Steuerschrägflächen verwendet werden. In Figur 5 ist diejenige Stellung der Gleitrippen 6 gezeigt, in der sie nicht über die Bühnenoberfläche 4 vorstehen. Wird die Schieberplatte 8 jedoch in Pfeilrichtung 9 nach oben geschoben, so drücken die Steuerschrägflächen 8b gegen die Schrägflächen 6a und heben die Gleitrippen 6 über die Bühnenoberfläche hinaus. Bei Zurückführung der Schieberplatte 8 in die in Figur 5 gezeigte Lage fallen die Gleitrippen 6 unter der Wirkung der Schwerkraft in ihre in Figur 5 gezeigte Stellung zurück. Hierzu ist die Bühnenoberfläche 4 aus der Vertikalen nach rückwärts geneigt. Das hat außerdem den Zweck, daß eine Folie 2 nach Zurückziehung der Vorsprünge 6 unter die Bühnenoberfläche unter der Wirkung der Schwerkraft an der magnetischen Schicht 4 zur Auflage kommt und dann von dieser angezogen wird. Dabei hat sich eine Bühnenneigung von $\alpha = 110°$ gegenüber der Horizontalen als günstig erwiesen. Es sind jedoch auch größere oder kleinere Neigungen bzw. eine horizontale Bühnenlage möglich. Für die Bewegung der Schieberplatte 8 bzw. mehrerer gemeinsam bewegter Schieber dient ein umsteuerbarer Elektromotor 10, der von einer elektronischen Steuervorrichtung 7 funktionsgerecht ein- und ausgeschaltet wird und beispielsweise über eine Zahnstange 11 den Antrieb bewirkt. Dabei ist es vorteilhaft, wenn die Abstände der Steuerschrägflächen 8b voneinander derart unterschiedlich sind, daß die unter dem Folienrand liegenden Gleitrippen 6 früher angehoben werden als die unter der Folienmitte liegenden Gleitrippen, so daß eine Folie 2 von ihrem Rand her von der magnetischen Schicht 4 abgelöst wird. Umgekehrt kommt dadurch eine Folie in der Mitte eher zum Aufliegen auf die magnetische Schicht 4 und wird hierdurch in ihrer Mitte zuerst fixiert, während sie gegenüber den noch hochstehenden Gleitrippen 6 wie in einer Mulde liegt und sich dadurch nicht verschieben kann. Die Steuerschrägflächen 8b könnten dabei auch so angeordnet sein, daß äußere Teile einer Gleitrippe 6 früher als die der Folienmitte zugewandten Teile angehoben bzw. später abgesenkt werden.

Die Vorsprünge 6 könnten aber gemäß Figur 6 auch durch rasterartig angeordnete Stifte 6 gebildet werden, die durch eine pneumatische Steuerung mittels Druckluft bzw. Unterdruck in ihre vorstehende bzw. zurückgezogene Stellung bewegbar sind. In diesem Falle müßte die Bühnenunterseite, wie schematisch dargestellt, luftdicht abgeschlossen sein, wobei unter den Stiften 6 luftdichte kanäle 13 vorgesehen sein müßten. Dabei ist die vorgeschobene Stellung der Stifte 6 strichpunktiert und mit 6´ bezeichnet.

Eine weitere Möglichkeit für die Ausgestaltung der Vorsprünge 6 könnte nach Figur 7 darin bestehen, daß eine elastische Folie 12 die Vorsprünge 6 als Sicken oder Mulden aufweist, die durch Druckluft durch Kanäle 13 nach außen in die strichpunktierte Lage 6´ bzw. durch Unterdruck in die ausgezogen gezeichnete Stellung bewegt werden. Die Lage einer Folie 2 in der angehobenen Stellung ist dabei in den Figuren 6 und 7 ebenfalls strichpunktiert gezeichnet und mit 2˝ beziffert.

Es bestünde nun die Möglichkeit, bekannte Kunststoffkassetten zu verwenden, die einen verschließbaren seitlichen Ein- und Ausführschlitz für einen darin anzuordnenden Film aufweisen, und eine derartige Kassette mit geöffnetem Schlitz so nach abwärts auf die Filmbühne 3, 4 zu richten, daß die darin enthaltene Folie mit der magnetisierbaren Schicht zur Oberfläche 4 und die Folie unter der Wirkung der Schwerkraft aus der Kassette nach unten zur Filmbühne gleitet. Sie könnte dann auf ihrer phosphorbeschichteten Seite von Saugern erfaßt und durch letztere in die Filmbühne transportiert werden. Dies wäre aber nachteilig, weil eine stärkere Abnutzung der Phosphorschicht beim Hindurchführen der Folie durch den Kassettenschlitz aufträte.

Wenn jedoch Kassetten 1 mit gegeneinander schwenkbaren Teilen 1a, 1b verwendet werden und die phosphorbeschichtete Folienseite auf dem Kassettenboden aufliegt, dann können die Folie 2 aus der Kassette 1 aufnehmende Sauger 14 die Folie nur an der magnetisierbaren Seite 2d, 2e erfassen, vgl. strichpunktierte Lage des Saugers 14 in Figur 3. Um die Folie 2 durch eine einzige Transportanordnung 14 bis in ihre auf der Filmbühne 3, 4 positionierte Stellung mit der phosphorbeschichteten Seite nach oben zu transportieren, müßten die Sauger durch besondere, durchgehende Ausnehmungen der Filmbühne von hinten her ein- und durchgreifen können. Hierdurch würde die gesamte Sauger- und Bühnenanordnung sehr kompliziert und es könnte durch die Ausnehmungen, an deren Stellen ja keine Magnetschicht und keine Unterlage vorhanden wäre, die Planlage der Folie in der Filmbühne verschlechtert werden.

Daher sind für die phosphorbeschichtete Folienseite besonders schonende Transportklammern 15 an der Filmbühne 3 vorgesehen, an die eine von der Saugervorrichtung 14 aus der Kassette 1 entnommene Folie 2 zum voll ständigen Transport in die Filmbühne 3, 4 übergeben wird, vgl. Figuren 1, 3 und 4. Zweckmäßigerweise ist je Transportklammer 15 ein Sauger 14 angeordnet. Die Abstände der Transportklammern 15 bzw. Sauger 14 voneinander ist so bemessen, daß auch die Folien 2 kleinsten Formats bei richtiger Positionierung der Kassette 1 von wenigstens zwei Saugern 14 und Transportklammern 15, die Folien 2 größten Formats von mindestens drei Saugern bzw. Transportklammern erfaßt werden.

Ober- bzw. unterhalb der magnetischen Oberfläche 4 jeweils im Anschluß an diese sind nichtmagnetische Bühnenflächen 16 zum Lagern der Transport- und Antriebsmittel vorgesehen. Die untereinander gleich ausgestalteten Transportklammern 15 sind in gleicher Lage gegen-über der Filmbühne 3 an umlaufenden Antriebsriemen 17 befestigt. Die Antriebsriemen 17 können als Zahnriemen ausgebildet sein und mittels eines gemeinsamen Elektromotors 18 durch dessen Motorwelle 19 durch Zahnräder 20 angetrieben werden. Der Elektromotor 18 ist zusammen mit dem Motor 10 auf dem unteren nicht-magnetischen Bühnenteil 16 gelagert. Die Motoren 18, 10 werden durch die elektronische Steuervorrichtung 7 gesteuert. Die Antriebsriemen 17, die auch als Keilriemen ausgebildet sein und durch Riemenscheiben angetrieben werden könnten, verlaufen auf der Vorder- und Rückseite der Filmbühne 3 und sind auf der Vorderseite in Längsnuten 21 unter die Bühnenoberfläche 4, 16 versenkt, so daß sie die plane Auflage der magnetisierbaren Schicht 2d nicht behindern. In Figur 1 ist nur eine der Längsnuten 21, die zugleich als Führungsnuten für die Transportklammern 15 ausgebildet sind, gezeigt.

Eine Transportklammer 15 weist, wie den Figuren 3 und 4 entnehmbar ist, einen Lagerkörper 23 auf, der am Antriebsriemen 17 befestigt ist und an dem ein schwenkbarer Klemmteil 24 gelagert ist. Im Schwenkweg des Klemmteiles 24, das eine ebene Auflagefläche 24a aufweist, ist am Antriebsriemen 17 und/oder am Lagerkörper 23 eine ebene Gegenplatte 25 angeordnet. Am Klemmteil 24 greift eine im Lagerkörper 23 abgestützte, das Klemmteil 24 in seine von der Gegenplatte 25 weggeschwenkte Lage drückende Feder 26 an. Außerdem greift am Klemmteil 24 ein Stößel 27 an, der pneumatisch durch die elektronische Steuervorrichtung 7 betätigbar ist und das Klemmteil 24 entgegen der Wirkung der Feder 26 mit der Auflagefläche 24a gegen die Gegenplatte 25 schwenkt, so daß dazwischen eine Folie 2 festlegbar ist.

Die Gegenplatte 25 steht etwa so weit über die Oberfläche 4 vor, wie die Vorsprünge 6 in ihrer vorgeschobenen Lage. Die Gegenplatte 25 weist an ihrer gegen eine Kassette 1 gerichteten Stirnseite eine Schrägfläche 25a auf, die entgegen der Eingaberichtung einer Folie 2 von der Oberfläche 4 nach rückwärts geneigt ist und dabei über die Oberfläche 4 vorsteht und bis unter diese in die Nutenführung 21 hineinreicht.

Um das Zurückführen einer Folie 2 in eine Kassette 1 zu erleichtern, ist in einem Bereich, der der Be- und Entladeposition der Transportklammern 15 zugeordnet ist, neben der jeweiligen Gegenplatte 25 in einer Vertiefung der Filmbühne 3 je ein Führungsbügel 29 gelagert. Er steht unter der Wirkung einer Feder 30, die ihn über die Oberfläche 4 zu drücken sucht, und wird in der Ausgangsposition der Transportklammern 15 durch diese unter die Oberfläche 4 gedrückt. In seiner freigegebenen Stellung steht der Führungsbügel 29 derart schräg über die Oberfläche 4 vor, daß er eine aus der Bühne 3 zu transportierende Folie 2 in eine bereitstehende geöffnete Kassette 1 bzw. in den Zugriffsbereich des Saugers 14 lenkt, vgl. Figur 4.

Bei Bedarf kann die ganze Filmbühne 3 in Gehäuseteilen 31 längs Führungsstangen 32 verschiebbar gelagert und beispielsweise mittels eines Schneckenantriebs 33 in verschiedene Positionen verschiebbar sein. Durchläuft die Filmbühne 3 zur Behandlung und Auswertung einer auf ihr befestigten Folie 2 mehrere Stellungen und gelangt sie dann in eine strichpunktiert gezeichnete Stellung, in der die Bezugsziffern mit ′ bezeichnet sind, so muß in dieser Stellung eine Kassette geeigneten Formats bereitstehen. Zweckmäßigerweise wird hierzu die Kassette 1, der die Folie 2 entnommen worden ist, ebenfalls in die Stellung 1′ bewegt, so daß die Folie in dieselbe Kassette zurücktransportiert werden kann.

Im folgenden wird nun ein Funktionsablauf einer vollständigen Folieneingabe und -entnahme an einer erfindungsgemäßen Filmbühne 4 unter Verwendung einer erfindungsgemäßen Folie 2 beschrieben.

In der ausgezogen gezeichneten Stellung nach Figur 1 und gemäß Figur 3 ist eine Kassette 1 gegenüber der Filmbühne 3 positioniert und bereits geöffnet. Sauger 14 heben die strichpunktiert gezeichnete, im Kas settenboden 1a liegende, belichtete Folie 2, deren phosphorbeschichtete Seite 2a gegen den Kassettenboden 1a schaut, längs der strichpunktiert gezeichneten Linie an ihrem vorderen Rand aus der Kassette 1 und legen das vordere Folienende auf die Auflagefläche 24a des Klemmteiles 24, welches von der Gegenplatte 25 abgeschwenkt ist, und zwar mit der Phosphorschicht 2d auf die Auflagefläche 24a. Dann wird durch die elektronische Steuervorrichtung 7 das Klemmteil 24 mittels eines pneumatischen Antriebs über den Stößel 27 gegen die Gegenplatte 25 geschwenkt und die Folie zwischen Auflagefläche 24a und Gegenplatte 25 geklemmt, wobei die Feder 26 als Puffer gegen zu großen Klemmdruck auf die Folie 2 wirkt. Diese Klemmstellung ist, allerdings in einer anderen Lage der Transportklammer 15, in Figur 4 gezeigt. Nun wird der Antrieb für die Transportklammern 15 eingeschaltet und diese bewegen sich gemeinsam und gleichzeitig um gleiche Wegstücke entlang der Filmbühne 3 über die vorstehenden Vorsprünge 6 nach abwärts und schleppen die Folie 2 bis in ihre positionierte Stellung, die je nach Foliengröße unterschiedlich ist. Die Steuervorrichtung 7 hat bereits beim Kassettenpositionieren eine Information über die Foliengröße erhalten und hält die Antriebsriemen in der für die Folienpositionierung richtigen Stellung an. Nun werden die Vorsprünge 6 unter die magnetische Oberfläche 4 zurückgezogen, so daß die magnetisierbare Folienschicht 2d auf der magnetischen Oberfläche 4 zur Auflage gelangt und dort fixiert wird. Dabei erfolgt die Fixierung in der Folienmitte früher als am Folienende, so daß während dieses Fixiervorganges der Klammerteil 24 von der Gegenplatte 25 abgehoben und die Transportklammer 15 weiter nach abwärts in den unteren Teil der nicht-mechanischen Bühnenfläche 16 bewegt werden, womit die Folie 2 nun völlig von den Transportklammern 15 freigegeben ist und auf der magnetischen Oberfläche 4 festliegt. Nun erfolgen auf bekannte Weise die Stimulierung, Abtastung und Löschung der Folie 2, wobei Filmbühne 3, 4 und Folie 2 ggf. parallel zur Kassette 1 in die strichpunktiert gezeichnete Stellung der Figur 1 bewegt werden können.

Nach der Auswertung und Löschung der Folie 2 beginnt deren Rücktransport in die geöffnete Kassette 1. Hierzu werden zunächst die geöffneten Transportklammern 15 nach aufwärts gegen den unteren Folienrand bewegt. Dabei fährt die Schrägfläche 25a unter den unteren Folienrand und schält diesen von der magnetischen Oberfläche 4 ab. Dann schwenkt das Klemmteil 24 gegen die Gegenplatte 25 und klemmt den unteren Folienrand wieder fest. Gleichzeitig oder kurz danach werden die Vorsprünge 6 über die magnetische Oberfläche 4 in bereits beschriebener Weise vorgeschoben und lösen die magnetisierbare Schicht 2d von der magnetischen Oberfläche 4 ab und bilden zugleich die Gleitkufen für den Rücktransport der Folie. Diese wird nun von den Transportklammern 15 in der der Eingaberichtung entgegengesetzten Richtung nach oben geschoben.

Schon beim Einführen der Folie 2 haben die Führungsbügel 29 nach Freigabe durch die Transportklammern 15 die in Figur 4 gezeigte, schräg vorstehende Stellung eingenommen. Die beim Rücktransport allmählich hochgeschobene Folie 2 wird dadurch in den Bereich der Sauger 14 bzw. auf die geöffnete, bereitstehende, leere Kassette 1 gelenkt. Dabei liegt sie unter der Wirkung der Schwerkraft immer noch schwach nach rückwärts geneigt auf dem Führungsbügel auf. Wenn beim Rücktransport die Transportklammern 15 die Stellung nach Figur 3 wieder erreicht haben, öffnen die Transportklammern 15 wieder und die Sauger 14 erfassen den unteren Folienrand und bewegen die Folie 2 wieder, mit der phosphorbeschichteten Seite 2d dem Kassettenboden 1a zugewandt, völlig in die bereitstehende Kassette 1, in die der obere Folienrand unter der Wirkung der nun wieder versenkten Führungsbügel 29 schon vorher gelenkt worden ist. Dann wird die Kassette geschlossen und aus dem Gerät ausgegeben. Wenn die Filmbühne 3 in eine zweite Stellung bewegt worden ist, wird sie nun in die in Figur 1 ausgezogen gezeichnete Stellung zurücktransportiert, so daß das Gerät für einen neuen Arbeitszyklus bereit ist.

Naturgemäß sind noch andere, der Einfachheit halber nicht gezeigte konstruktive Ausgestaltungen möglich. So könnte das Öffnen der Klammerteile 24 pneumatisch und das Schließen unter Federdruck erfolgen. An die Stelle von Saugern 14 könnten bei entsprechender räumlicher Nähe von Kassette und Filmbühne als Transportmittel Reibrollen treten, da diese nur an der magnetisierbaren Schicht 2d bzw. der Schutzschicht 2e angreifen. Statt der Zahnriemen 17 könnten für den Transport der Transportklammern 15 auch Seilzüge oder ein Zahnstangenantrieb oder Schneckenantrieb Verwendung finden. Schließlich könnte die Neigung der Filmbühne 3 nach rückwärts noch größer sein oder die Filmbühne 3 könnte sogar horizontal angeordnet sein, wobei dann eine positionierte Kassette 1 auch eine entsprechende Neigung aufweisen müßte.

**Ansprüche**

1. Röntgenaufnahmefolie, die als strahlenempfindliche Schicht eine auf einer Unterlage aufgebrachte Schicht stimulierbaren Phosphors aufweist, dadurch gekennzeichnet, daß auf der der Phosphorschicht (2a) abgewandten Seite der Unterlage (2b) eine Schicht (2d) aus magnetisierbarem Material aufgebracht ist.

2. Röntgenaufnahmefolie nach Anspruch 1, dadurch gekennzeichnet, daß die magnetisierbare Schicht (2d) durch eine Stahlfolie gebildet wird.

3. Gerät zur Behandlung und/oder Auswertung einer mit Röntgenstrahlen belichteten Röntgenaufnahmefolie nach einem der Ansprüche 1 oder 2, in dem die Röntgenaufnahmefolie zur Behandlung und/oder Auswertung in eine Planfilmbühne einführbar und auf dieser festlegbar ist, dadurch gekennzeichnet, daß die Planfilmbühne (3) eine permanentmagnetische Oberfläche (4) von mindestens der Größe der größten vorkommenden Aufnahmefolien-Fläche aufweist, daß über die Oberfläche (4) vorstehende, versenkbare Gleitvorsprünge (6) in der Planfilmbühne (3) angeordnet sind und die Aufnahmefolie (2) über die Vorsprünge (6) gleitend in ihre Behandlungsposition bringbar ist und daß die Vorsprünge (6) in ihre versenkte Stellung bewegbar sind und da durch die magnetisierbare Schicht (2d) mit der permanent magnetischen Oberfläche (4) in flächige Berührung bringbar ist.

4. Gerät nach Anspruch 3, dadurch gekennzeichnet, daß über der Oberfläche (4) wenigstens eine zu öffnende und zu schließende Transportklammer (15) in Eingabe- und Ausführrichtung (22) einer Aufnahmefolie (2) verschiebbar an der Planfilmbühne (3) geführt ist, daß die Aufnahmefolie (2) durch Transportmittel (14), mit ihrer magnetisierbaren Schicht (2d) der permanent magnetischen Oberfläche (4) zugewandt, in die geöffnete oder geöffneten Transportklammern (15) einlegbar ist und diese schließbar sind und die Aufnahmefolie (2) mittels der Transportklammer oder -klammern (15) über die Vorsprünge (6) in ihre Behandlungsposition bringbar ist.

5. Gerät nach einem der Ansprüche 3 oder 4, dadurch gekennzeichnet, daß die Oberfläche (4) der Planfilmbühne (3) horizontal oder derart gegen die Horizontale geneigt angeordnet ist, daß die Aufnahmefolie (2) unter der Wirkung der Schwerkraft an der Oberfläche (4) bzw. den Vorsprüngen (6) anliegt.

6. Gerät nach Anspruch 5, dadurch gekennzeichnet, daß die Neigung der Oberfläche (4) gegen die Horizontale etwa 110° beträgt.

7. Gerät nach einem der vorhergehenden Ansprüche, dadurch gekennzeichnet, daß die Aufnahmefolie (2) mittels wenigstens eines Saugers (14) aus einer gegenüber der Planfilmbühne (3) positionierten, geöffneten Planfilmkassette (1) an eine geöffnete Transportklammer (15) übergebbar ist bzw. von einer geöffneten Transportklammer (15) in die Kassette (1) zurückführbar ist.

8. Gerät nach Anspruch 7, dadurch gekennzeichnet, daß je Transportklammer (15) ein Sauger (14) vorgesehen ist.

9. Gerät nach einem der vorhergehenden Ansprüche, dadurch gekennzeichnet, daß die Transportklammern (15) je an einem umlaufenden Antriebsriemen (17) befestigt sind.

10. Gerät nach Anspruch 9, dadurch gekennzeichnet, daß die umlaufenden Antriebsriemen (17) als Zahnriemen ausgebildet sind und daß je ein auf einer Motorwelle (19) gelagertes Antriebszahnrad (20) mit einem Zahnriemen (17) in Eingriff steht.

11. Gerät nach einem der vorhergehenden Ansprüche, dadurch gekennzeichnet, daß eine Transportklammer (15) einen am Antriebsriemen (17) befestigten Lagerkörper (23), an dem ein schwenkbarer Klemmteil (24) gelagert ist, und eine im Schwenkweg des Klemmteiles (24) angeordnete, am Lagerkörper (23) oder am Antriebsriemen (17) angeordnete Gegenplatte (25) aufweist und daß am Klemmteil (24) eine das Klemmteil (24) in seine von der Gegenplatte (25) weggeschwenkte Stellung drückende Feder (26) angreift und das Klemmteil (24) durch einen luftdruckgesteuerten Stößel (27) gegen die Gegenplatte (25) schwenkbar ist oder umgekehrt.

12. Gerät nach Anspruch 11, dadurch gekennzeichnet, daß Transportklammer (15) und Antriebsriemen (17) in einer Nutenführung (21) teilweise in die Oberfläche (4) versenkt geführt sind, daß die Gegenplatte (25) etwa so viel über die Oberfläche (4) übersteht wie die Vorsprünge (6) in ihrer vorspringenden Stellung und daß die Gegenplatte (25) eine entgegen der Eingaberichtung einer Aufnahmefolie (2) von dieser weg geneigte, stirnseitige Schrägfläche (25a) aufweist, die bis unter die Oberfläche (4) in Nuten der Nutenführung (21) reicht.

13. Gerät nach einem der vorhergehenden Ansprüche, dadurch gekennzeichnet, daß die Transportklammern (15) bei Erreichen der Behandlungsposition nach Versenkung der Vorsprünge (6) unter die Oberfläche (4) in ihre geöffnete Stellung schwenkbar und in Eingaberichtung bis zur Freigabe der Aufnahmefolie (2) weiterbewegbar sind.

14. Gerät nach einem der vorhergehenden Ansprüche, dadurch gekennzeichnet, daß zur Zurückführung der Aufnahmefolie (2) die Vorsprünge (6) in ih re vorspringende Stellung und die Schrägfläche (25a) der Gegenplatte (25) unter die magnetisierbare Schicht (2d) der Aufnahmefolie (2) bewegbar und das Klemmteil (24) gegen die Gegenplatte (25) schwenkbar sind, sc daß die Aufnahmefolie (2) entgegen ihrer ersten Transportrichtung in die Planfilmbühne (3) aus dieser herausschiebbar ist.

15. Gerät nach einem der Ansprüche 7, 11 oder 12, dadurch gekennzeichnet, daß das Klemmteil (24) in der geöffneten Stellung der Transportklammer (15) eine derartige Neigung hat, daß der Sauger (14) eine angesaugte Aufnahmefolie (2) auf dem Klemmteil (24) ablegen kann.

16. Gerät nach Anspruch 11 oder einem der vorhergehenden Ansprüche, dadurch gekennzeichnet, daß in einem Bereich, der der Be- und Entladeposition der Transportklammern (15) zugeordnet ist, neben der jeweiligen Gegenplatte (25) in einer Vertiefung (28) ein Führungsbügel (29) für die Aufnahmefolie (2) gelagert ist, der durch den Lagerkörper (23) unter die Oberfläche (4) drückbar ist und bei Bewegung der Transportklammer (15) aus der Beladeposition bzw. vor Wiedererreichen von deren Entladeposition durch eine Feder (30) in eine schräg über die Oberfläche (4) vorstehende Lage drückbar ist, in der die Aufnahmefolie (2) durch den Führungsbügel (29) gegen den Sauger (14) und/oder eine positionierte, geöffnete Kassette (1) gelenkt wird.

17. Gerät nach Anspruch 3, dadurch gekennzeichnet, daß die Vorsprünge (6) durch zueinander parallel angeordnete, in Vertiefungen (5) liegende Rippen (6) gebildet werden, deren Unterseiten gleichartige Schrägflächen (6a) aufweisen, gegen die gleich geneigte Schrägflächen (8b) eines Schiebers (8) schiebbar sind.

18. Gerät nach Anspruch 3, dadurch gekennzeichnet, daß die Vorsprünge (6) durch pneumatisch betätigbare Nippel gebildet werden.

19. Gerät nach Anspruch 3, dadurch gekennzeichnet, daß die Vorsprünge durch eine dünne, elastische Platte (12) mit Noppen oder Sicken (6) gebildet werden, die durch Über- bzw. Unterdruck in ihre vorstehende bzw. unter die Oberfläche (4) zurückgezogene Stellung bewegbar sind.

Fig. 1

EP 0 334 136 A2

A-G 5354

Fig.3

Fig.4

Fig.2

A-G 5354

Fig. 5

Fig. 6

Fig. 7